Europäisches Patentamt

**European Patent Office**

Office européen des brevets

(19)

(11) Numéro de publication : **0 058 120**
**B1**

(12) **FASCICULE DE BREVET EUROPÉEN**

(45) Date de publication du fascicule du brevet :
09.09.87

(51) Int. Cl.⁴ : **F 16 J   9/00**, F 16 J   9/20

(21) Numéro de dépôt : **82400204.2**

(22) Date de dépôt : **05.02.82**

(54) Nouvel ensemble: cylindre, piston et segments légers pour moteurs et compresseurs.

(30) Priorité : 06.02.81 FR 8102353
23.12.81 FR 8124100
15.01.82 FR 8200625

(43) Date de publication de la demande :
18.08.82 Bulletin 82/33

(45) Mention de la délivrance du brevet :
09.09.87 Bulletin 87/37

(84) Etats contractants désignés :
DE FR GB IT NL SE

(56) Documents cités :
FR-A- 826 487
FR-A- 869 831
FR-A- 1 540 312
FR-A- 2 185 094
GB-A- 593 392
GB-A- 1 126 457
GB-A- 1 183 900
US-A- 2 262 311
US-A- 2 846 280
US-A- 2 893 797
SCHIP EN WERF, vol.41, no.15, juillet 1974, Rotterdam (NL), G.K. AUE:"On the mechanism of a piston ring seal", pages 305-317

(73) Titulaire : Geffroy, Robert
1, Boulevard Richard Wallace
F-92201 Neuilly sur Seine (FR)

Geffroy, Christophe
1, Boulevard Richard Wallace
F-92201 Neuilly sur Seine (FR)

(72) Inventeur : Geffroy, Robert
1, Boulevard Richard Wallace
F-92201 Neuilly sur Seine (FR)
Inventeur : Geffroy, Christophe
1, Boulevard Richard Wallace
F-92201 Neuilly sur Seine (FR)

(74) Mandataire : Rinuy, Guy et al
14, Avenue de la Grande Armée
F-75017 Paris (FR)

## Description

Les pistons de moteurs à combustion interne ou compresseurs sont généralement équipés d'un jeu de segments dont les missions sont d'empêcher, entre pistons et cylindres, les passages de gaz vers le carter et les passages d'huile vers la tête de piston.

Les segments de ces jeux actuellement connus interfèrent en fonctionnement les uns avec les autres et assurent ensemble, plus ou moins complètement, les missions susdites, chacun de ces segments n'assurant pas entièrement les siennes.

Les segments de compression laissent passer des gaz de la chambre de combustion ou de compression vers le carter, et les segments racleurs raclent dans les deux sens, c'est-à-dire qu'ils travaillent contre leur mission dans les courses remontantes du piston.

Ainsi, leurs rôles ne sont pas exactement délimités ; il en résulte des difficultés de mise au point, des instabilités, des insuffisances et des incertitudes de fonctionnement.

Enfin, tous ces segments sont appliqués avec force contre le cylindre et sont lourds, ce qui entraîne une dépense appréciable d'énergie par frottement et par inertie.

On connaît notamment ainsi par le document GB-AS-593 392 un segment racleur comportant un anneau en métal plat raccordé par une pliure circulaire à une paroi circulaire latérale présentant une ligne de raclage. La paroi circulaire comporte une pluralité de larges secteurs latéraux délimités par des échancrures en forme de « V ». L'ouverture du « V » de chaque échancrure est disposée sur la ligne de raclage qui est ainsi interrompue tandis que la pointe du « V » est située sur la paroi circulaire globalement à mi-distance entre la ligne de raclage et la pliure circulaire. La paroi circulaire, qui est d'épaisseur substantielle, est chanfreinée. Cette structure est rigide et non étanche à l'huile. De plus les frottements sont importants.

On connaît par le document FR-A-869 831 un segment de compression composé de quatre anneaux non coupés, montés sur piston à tête démontable ; deux de ces anneaux comportent un grand nombre de mini-ressorts contenus dans leur section, fabriqués à un diamètre supérieur à celui du cylindre, puis immobilisés sous forte contrainte radiale en position alternée l'un par rapport à l'autre, puis bloqués énergiquement en cette position radialement contrainte contre la face supérieure de leur gorge démontable et contre le cylindre ; ils n'ont aucune liberté de mouvement ni radiale ni axiale et n'ont aucun contact contre la face inférieure de leur gorge. L'application énergique de ces anneaux s'exerce contre la face supérieure de leur gorge et contre le cylindre sous une très forte pression et occasionne d'importantes forces de frottements. Les mini-ressorts sus-évoqués participent seulement au moment du montage à cette forte pression en coopération avec les deux autres anneaux du groupe de quatre, dont l'un deux est un ressort axial énergique, et, en fonctionnement les deux anneaux munis de mini-ressorts sont bloqués contre le cylindre et ces mini-ressorts n'exercent aucune pression contre le cylindre.

On connaît aussi, par le document US-A-2 262 311 un segment de compression se présentant sous forme d'un ou plusieurs anneaux monopièce présentant une coupe et muni d'une pluralité de mini-ressorts présentant chacun le même dessin que celui des mini-ressorts cités ci-dessus. En fonctionnement le ou les anneaux sont très fortement comprimés. Le nombre important de mini-ressorts permet à ce segment de se conformer à la forme d'un cylindre usé, mais le rend peu étanche aux gaz. De plus les frottements occasionnés sont importants.

En définitive la présente invention a notamment pour objet d'améliorer la segmentation connue en proposant un ensemble segment de compression segment racleur présentant notamment les avantages suivants :

pour le segment de compression : étanchéité élevée au passage de gaz, diminution du frottement, réduction d'usures, allègement du segment de compression, gains en performances, en durée des organes et en économie d'énergie,

pour le segment racleur : raclage de l'huile, réduction du frottement sur le cylindre à une fraction très faible du frottement de tous autres segments racleurs, réduction d'usures, allègement du segment racleur, gains en performances, en durée des organes et en économie d'énergie,

chacune des missions assignées à la segmentation est entièrement assurée par le segment qui lui est consacré.

La segmentation selon l'invention est définie dans les revendications 1 à 12.

La segmentation ainsi définie est d'une grande simplicité ; elle est d'un encombrement et d'un poids plus réduits que les segmentations actuellement connues. Le segment de compression assure un contrôle de haute efficacité du passage des gaz entre chambre de combustion ou de compression et carter, et le segment racleur présente deux actions nouvelles de très haute efficacité : l'une, de raclage à simple effet, pendant les courses descendantes du piston, l'autre de recyclage à simple effet, pendant les courses remontantes du piston.

En effet, dans les courses descendantes, le bord inférieur de sa face externe mince et élastique, presque parallèle au cylindre, constitue un dispositif pour racler l'huile qui est idéal, bien que sa force d'application sur le cylindre soit minime et, dans les courses remontantes, l'angle faible avec le cylindre de la paroi de sa face extérieure constitue un autre dispositif idéal, bien que sa force d'application sur le cylindre soit encore minime, pour recycler vers le carter, par effet dynamique, l'huile qui subsiste sur la paroi du cylindre.

De plus, l'efficacité élevée et indépendante de chacun de ces segments crée des conditions plus favorables au fonctionnement de l'autre que l'interaction connue jusqu'alors. Ainsi, les missions qui incombent à la segmentation sont remplies avec une efficacité supérieure à celle des segmentations traditionnelles avec une usure moindre et une économie d'énergie. Enfin, de cette meilleure efficacité de chacun des segments notamment de la réduction du passage de gaz et de leur plus faible frottement, résulte un régime de lubrification entre piston, segments et cylindre, entièrement nouveau, qui apporte plusieurs conditions de fonctionnement nouvelles :

la possibilité d'adopter un niveau de polissage des parois de cylindre très supérieur à leur niveau habituel dont il résulte, d'autres réductions des frottements et de l'usure de tous les organes de ces nouveaux ensembles qui sont une contribution supplémentaire aux économies d'énergie,

la possibilité d'établir le portage mécanique entre cylindre et piston jusqu'à la tête du piston, ce qui améliore les échanges thermiques entre cylindre et piston et, ajouté au fait qu'il ne comporte que deux segments, permet de raccourcir et ainsi d'alléger substantiellement le piston.

La présente invention a également trait au piston sur lequel est montée la segmentation définie ci-dessus et au cylindre dans lequel coulisse ce piston. Les caractéristiques du cylindre et du piston sont définies dans les revendications 13 à 15.

Enfin il convient d'observer que tant le segment de compression que le segment racleur selon la présente invention peuvent être utilisés isolément l'un de l'autre et apporter leurs avantages propres et, notamment, ceux rappelés plus haut.

Les caractéristiques et avantages de la présente invention ressortiront de la description qui va suivre d'un ensemble selon l'invention, faite en regard des dessins annexés sur lesquels :

la figure 1 représente, dans un cylindre coupé un piston muni d'une segmentation composée d'un segment de compression et d'un segment racleur ;

les figures 2 et 4 sont chacune une vue en coupe à une autre échelle, d'une partie du piston montrant un exemple de segment de compression, dans un cylindre ;

la figure 3 montre un moyen d'obturer le passage de gaz par la coupe d'un segment de compression ;

les figures 5, 6 et 7 sont des vues en plan de trois anneaux composant le segment de compression de la figure 4 ;

la figure 8 est une vue en coupe, à plus grande échelle, suivant la ligne A-A des figures 5 et 9 ;

les figures 9 et 10 sont des vues en plan d'une variante de l'anneau des figures 5 et 6 ;

les figures 11 et 12 sont des vues en perspective d'un segment racleur et d'une variante de ce segment ;

les figures 13 et 14 sont des vues en coupe d'une partie de piston montrant chacune la coupe du segment racleur des figures 11 et 12 en position de fonctionnement ;

la figure 15 représente en perspective une cale annulaire de segment racleur ;

les figures 16 et 18 représentent deux vues latérales d'un segment racleur de la figure 11 à l'état libre ;

les figures 17 et 19 sont des vues en coupe des figures 16 et 18 ;

la figure 20 est une vue en perspective de butées de coupe ajoutées à un segment racleur des figures 11, 13 et 16 ;

les figures 21 et 22 sont des vues en perspective de variantes du segment racleur de la figure 11 ;

les figures 23 et 24 montrent une variante de segment de compression selon l'invention ;

la figure 25 montre un exemple de micro-ressort de segment de compression selon l'invention.

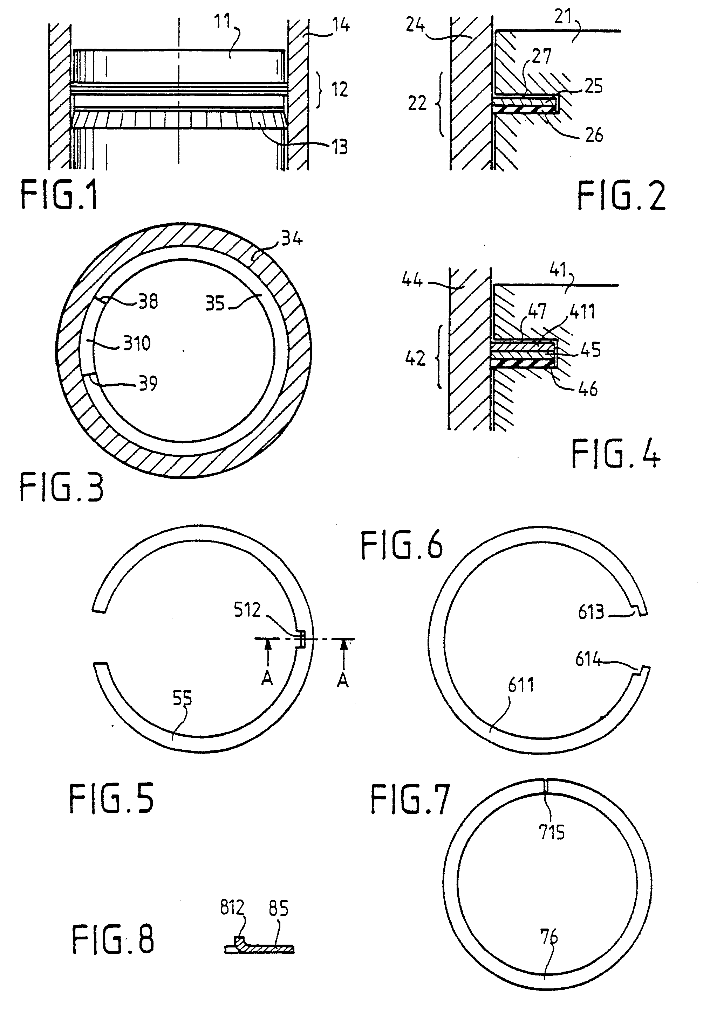

La figure 1 présente, sur un piston 11 un segment de compression 12 et un segment racleur 13 ; l'ensemble est disposé dans un cylindre 14. Après la description de ces segments et avec une explication de fonctionnement de l'ensemble, on reviendra sur les particularités du piston et du cylindre qui sont rendues possibles par l'emploi de ces segments.

La figure 2 présente, dans une coupe partielle du piston 21 dans son cylindre 24, un premier exemple de segment de compression 12, 22. Il est composé de deux éléments minces 25 et 26 disposés avec un jeu 27 dans la gorge du piston 21. Ce jeu 27 est limité au minimum nécessaire pour assurer la liberté de mouvement des deux éléments minces ainsi que l'accès de la pression de la chambre de combustion ou de compression par le jeu 27 sur le dessus et sur la face cylindrique intérieure du segment 22.

Les deux éléments minces du segment 22 sont d'une part un anneau 25 coupé, mince (épaisseur d'environ 0,7 mm) en métal élastique, fonte ou acier par exemple, et d'autre part un anneau 26 coupé, mince (épaisseur d'environ 0,5 mm) en matériau plastique tel que cuivre recuit ou polytétrafluoroéthylène (matériau commercialisé sous la marque Téflon). L'anneau plastique 26 est toujours disposé entre l'anneau en métal élastique 25 et la face de gorge du piston qui est du côté du carter.

L'anneau 25 à l'état libre a un diamètre plus grand que celui du cylindre afin de lui donner une force d'extension contre le cylindre et la fermeture du passage de gaz par le jeu de coupe le long de la paroi du cylindre est assurée par la disposition présentée figure 3 ; l'anneau 25 y est représenté, vu en plan en 35, à l'état bandé dans son cylindre 34. La longueur du jeu de coupe est augmentée pour intercaler entre ses faces de coupe 38 et 39 un secteur d'anneau 310 de section analogue a celui de l'anneau métallique 35 mais en matière plastique, polytétrafluoroéthylène (TEFLON) de préférence.

Ce secteur 310 est disposé à froid sans jeu entre les faces de coupe 38 et 39 de telle sorte que par l'effet de la dilatation à chaud de l'anneau 35 et du secteur 310 et de la pression des gaz sur la face intérieure de l'anneau et du secteur, ces deux organes sont appliqués contre le cylindre et assurent ainsi en coopération la fermeture du passage de gaz entre le joint de coupe de l'anneau métallique 35 et le cylindre.

La longueur du secteur 310 doit être suffisante pour que son élasticité (qui est de l'ordre de 4 % de sa longueur pour du Téflon) soit > à la somme des dilatations de l'anneau 35 et du secteur 310, afin d'éviter que ce secteur ne subisse une réduction permanente de sa longueur.

La figure 4 présente, dans une coupe partielle du piston 1 dans son cylindre 44. Un second exemple de segment de compression 12, 42 ; il est composé de trois éléments minces 45, 46, 411 disposés avec un jeu 47 dans la gorge du piston 41. Ce jeu 47 est limité au minimum nécessaire pour assurer la liberté de mouvement des trois éléments minces ainsi que l'accès de la pression de la chambre de combustion ou de compression par le jeu 47 sur le dessus et sur la face cylindrique intérieure du segment 42.

Les figures 5 à 7 montrent séparément une vue en plan de chacun de ces trois éléments du segment 42 qui sont, d'une part deux anneaux 45, 55 et 411, 611 accolés, coupés, minces (épaisseur environ 0,7 mm) en métal élastique, fonte ou acier par exemple et, d'autre part, un anneau 46, 76 coupé, mince (épaisseur environ 0,5 mm) en matériau plastique tel que cuivre recuit ou polytétrafluoroéthylène (TEFLON) ; l'anneau plastique 46, 76 est toujours disposé entre les deux anneaux élastiques 45, 55 et la face de gorge du piston qui est du côté du carter.

Les anneaux 45, 55 et 411, 611 ont, à l'état libre, un diamètre plus grand que celui du cylindre afin de leur donner une force d'extension contre le cylindre et leur jeu de coupe est juste nécessaire à leur dilatation à chaud lorsqu'ils sont montés sur leur piston dans le cylindre. L'anneau 46, 76, sans élasticité, est approximativement à la dimension du cylindre et son jeu de coupe 715 est approximativement nul à froid, de telle sorte que sous l'effet combiné de la dilatation thermique et de la pression agissant par le jeu 47 du segment sur sa surface cylindrique intérieure, l'anneau 46, 76, comme du reste les anneaux 45, 55 et 411, 611 sont appliqués contre le cylindre d'autant plus que les pressions dans la chambre de combustion ou de compression sont plus élevées.

Dans cet exemple, le moyen d'obturer le passage de gaz le long du cylindre par le jeu de la coupe est d'empêcher les anneaux 45, 55 et 411, 611 de tourner l'un par rapport à l'autre, afin d'empêcher leurs coupes de se superposer, mais sans les brider pour que chacun reste libre de se mouvoir dans son plan et de s'appliquer contre le cylindre sans contrainte reçue ni de l'autre, ni du piston.

La figure 8 est une coupe AA des anneaux 55 et 95 ; elle montre un bon exemple de réalisation de cette retenue : disposer sur l'anneau inférieur 45, 55, 85, 95, un ergot 512, 812, 912 légèrement moins haut que l'épaisseur de l'anneau supérieur 411, 611, 1011. Dans cet anneau supérieur, un logement est ménagé pour recevoir l'ergot 512, 812, 912 avec un jeu suffisant pour ne pas brider les deux anneaux 45 et 411, 55 et 611, 95 et 1011. Un bon exemple de réalisation de ce logement est constitué par les deux échancrures 613 et 614, 1013 et 1014 ; cette position des échancrures est avantageuse car elle permet, en montant d'abord l'anneau 45, 55, 95 dans la gorge du piston, de monter ensuite l'anneau 411, 611, 1011 en alignant sa coupe en face de l'ergot 512, 912.

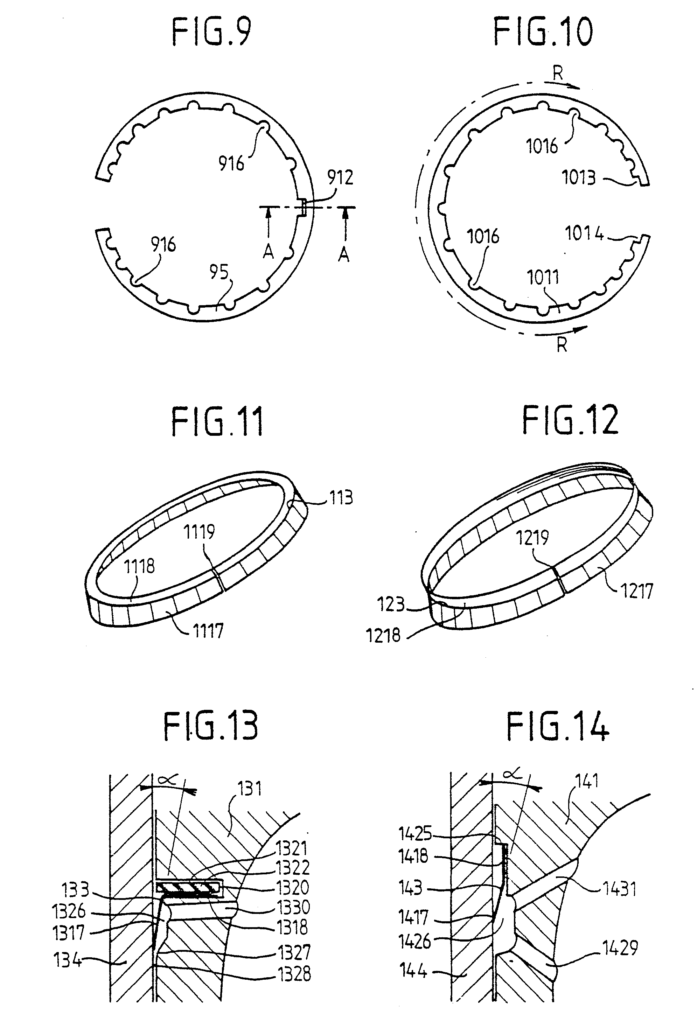

Les figures 9 et 10 présentent les vues en plan d'une variante d'exécution des anneaux 45 et 411. Sur les anneaux 95 et 1011, on retrouve l'ergot 912 et les échancrures 1013 et 1014, mais on a ajouté des encoches 916 et 1016 réparties sur le pourtour intérieur de chaque anneau.

En voici la raison et le rôle :

La largeur d'un anneau mince coupé s'oppose à l'obtention d'une élasticité radiale suffisante pour obtenir un contact léger et bien réparti entre le bord extérieur de l'anneau mince et le cylindre. Avec les encoches 916 et 1016, on peut à la fois conserver la largeur de l'anneau mince qui est nécessaire à son bon maintien dans la gorge du piston et retrouver l'élasticité radiale qui manque à l'anneau mince large.

De plus, on sait que pour fabriquer des segments en fonte ou acier d'épaisseur normale, il est nécessaire de recourir à des irrégularités forme circulaire et de la largeur du segment pour obtenir une bonne répartition de l'effort d'extension sur tout le pourtour du segment en contact avec le cylindre, en évitant notamment la raideur des voisinages de la coupe. Le nombre et l'emplacement desdites encoches est un bon moyen peu onéreux d'influencer cette répartition, par exemple en répartissant régulièrement les encoches dans le secteur RR montré figure 10 qui est opposé à la coupe et en les resserrant au voisinage de la coupe.

Ainsi donc, avec les anneaux minces en métal élastique comportant des encoches 916 et 1016 judicieusement établies et réparties, on obtient ce comportement nouveau pour des anneaux minces :

élasticité, souplesse et conformation permettant un contact léger et également réparti, sur tout leur pourtour, entre les anneaux et le cylindre.

Les figures 11 et 12 représentent en perspective deux exemples 113 et 123 de réalisation du segment racleur. Il comprend une seule pièce, en acier à ressort, composée d'une couronne tronconique de lamelles élastiques 1117, 1217 très minces, de 0,12 à 0,20 mm d'épaisseur par exemple. Ces lamelles sont séparées entre elles du côté de la grande base de la couronne tronconique et reliées entre elles du côté de la petite base de ladite couronne, par exemple par une rondelle plate 1118 ou un cylindre 1218.

Le métal de ces segments racleurs est soumis, soit à l'état de matière première, soit à l'état de pièce en cours d'exécution, à un traitement thermique qui lui confère l'élasticité optimale. Les extrémités des lamelles élastiques 1117, 1217, seront en principe rodées avant montage ; elles auront avec le cylindre une surface circulaire de contact très étroite, par exemple de 0,10 à 0,20 mm de large et elles peuvent être durcies par un traitement complémentaire localisé afin de constituer une surface de contact avec le cylindre de dureté élevée et d'augmenter ainsi sa protection contre l'usure. Cette protection résulte déjà du fait que les lamelles qui composent cette surface de contact sont appliquées contre le cylindre sous effort très léger, ce qui est expliqué plus loin.

Les figures 13 et 14 sont des vues partielles, en coupe, d'un piston 131 ou 141 monté dans son cylindre 134 ou 144 et portant en 133 un segment racleur de la figure 13 et en 143 un segment racleur de la figure 14.

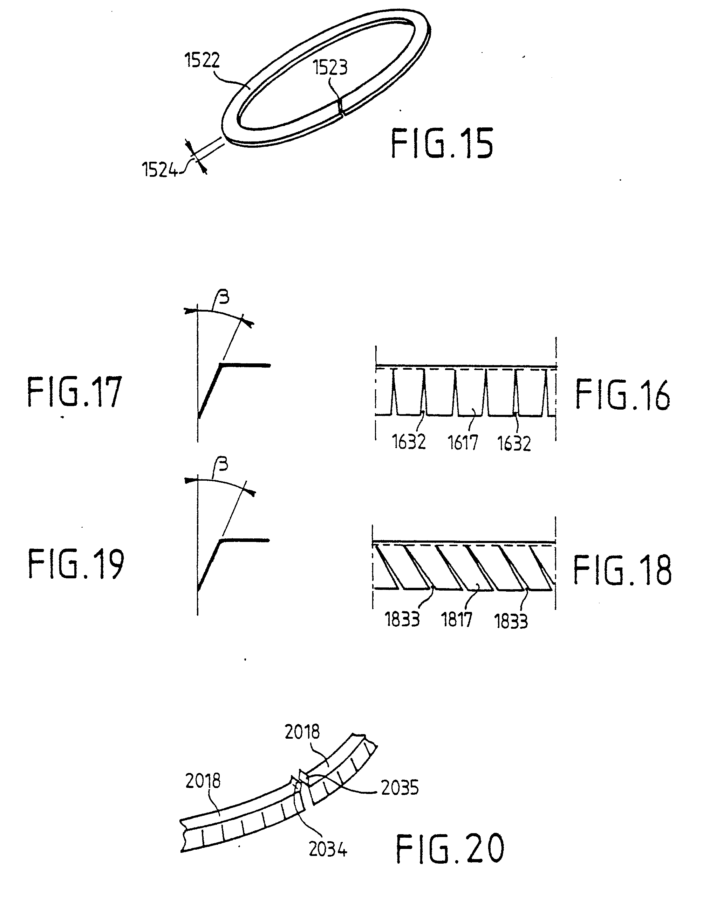

Le segment racleur 133 est tenu dans une gorge 1320 du piston 131 par sa partie formant rondelle plate 1118, 1318 avec un jeu minimum 1321 et une cale annulaire 1322 est utilisée, s'il y a lieu, afin de donner à la gorge 1320 une largeur aisément exécutable supérieure à l'épaisseur de la rondelle 1118, 1318 qui peut être de 0,12 à 0,20 mm par exemple. Cette cale annulaire 1322 est présentée figure 15 en 1522. Elle comporte si nécessaire une coupe 1523 pour permettre son montage ; son diamètre extérieur est plus petit que celui du piston car elle n'a pas mission de frotter contre le cylindre et au repos, sa coupe 1523 est jointive ; son épaisseur est représentée en 1524 ; il en sera question plus loin, figure 20 ; elle peut être en métal, léger de préférence, ou mieux en matière plastique, par exemple en polytétrafluoroéthylène (TEFLON) ou en matière élastique, sans coupe, par exemple en élastomère fluoré (matériau commercialisé sous la marque déposée VITON), en ces cas, elle ajoute à son rôle de cale annulaire celui de joint annulaire.

Le segment racleur 143 est maintenu sur le piston 141 par sa partie cylindrique 1218, 1418 par collage (par résines anaérobies, ou cyanoacrylates, par exemple) dans un logement circulaire 1425 ménagé dans le piston. Entre les lamelles 1317 ou 1417 et le piston 131 ou 141, on peut ménager dans le piston une chambre annulaire 1326 ou 1426 dont la mission est de recueillir l'huile raclée par les lamelles 1317 ou 1417 dans les courses descendantes du piston.

Le retour au carter de cette huile peut se faire par les moyens suivants, utilisés selon les besoins, ensemble ou séparément :

pendant les courses remontantes du piston :

une forme tronconique 1327 raccorde la chambre 1326 et le haut de la jupe 1328 du piston ; cette forme présente un angle avec la paroi du cylindre favorable à l'entraînement dynamique de l'huile, par exemple 7°, et produit le retour de l'huile au carter via le jeu entre le piston et le cylindre,

une rangée de trous radiaux 1429 orientée vers le bas du piston, faisant communiquer le bas de la chambre annulaire 1426 (ou 1326) avec le centre du piston, produit par son orientation un effet dynamique entraînant l'huile vers le centre du piston,

pendant les courses descendantes du piston :

une rangée de trous radiaux 1330 perpendiculaire à l'axe du piston, ou de trous 1431 orientés vers la tête du piston, faisant communiquer le haut de la chambre annulaire 1326 ou 1426 avec le centre du piston, mène l'huile vers le centre du piston, les trous 1431 y ajoutant par leur orientation un effet dynamique.

Les figures 16 et 17 représentent de face et de profil, à l'état libre, les segments 113, 133, des figures 11 et 13, avec des coupes entre lamelles 1632 perpendiculaires au plan radial du segment.

Les figures 18 et 19 représentent de la même manière une variante du même segment comportant des coupes entre lamelles 1833 inclinées par rapport au plan radial du segment. Compte tenu de la différence de contact entre les lamelles et le cylindre pendant les courses descendantes de raclage et les courses remontantes de recyclage, ces coupes inclinées font tourner le segment, ce qui est favorable à la parfaite conformation du segment dans le cylindre, donc à son efficacité.

Lorsque le piston est monté dans le cylindre, les lamelles élastiques 1317 et 1417 sont maintenues serrées par le cylindre ; elles présentent avec sa paroi un angle α, figures 13 et 14 et les deux faces 1119 et 1219 de la coupe du segment sont en butée l'une contre l'autre. Dans cette position, par construction et sauf jeux très faibles pour les besoins du fonctionnement et de la lubrification, les lamelles 1317 et 1417 sont jointives, comme représenté sur les figures 11 et 12 qui les montrent jointives, comme elles le sont dans le cylindre. Par exemple, pour un cylindre de 80 mm, le total des jeux très faibles entre les lamelles peut être de 0,20 à 0,40 mm. Le nombre de lamelles étant pour ce diamètre d'environ 48, le jeu entre lamelles, lorsqu'elles sont en place dans le cylindre, est de 0,004 mm à 0,008 mm, soit de 4 à 8 microns. La valeur extrêmement faible de ce jeu confirme bien la définition de « lamelle latérale jointive ». Ces jeux peuvent varier, tout en restant très faibles, pour faire face aux besoins du fonctionnement et de la lubrification.

Le bord du côté carter de ces lamelles jointives qui est en position de raclage dans les courses descendantes et de recyclage dans les courses montantes, présente une surface étroite circulaire continue en contact avec le cylindre. A l'état libre hors du cylindre, les coupes 1119 et 1219 sont, par construction, de préférence fermées, afin de faciliter leur maintien en place sur le piston avant son montage dans le cylindre, mais les lamelles élastiques 1117 et 1217 sont ouvertes, c'est-à-dire que leur diamètre extérieur est plus grand et qu'elles ne sont plus jointives ; elles présentent entre elles des espaces 1632 et 1333 et elles forment avec l'axe du segment, qui est parallèle à la paroi du cylindre lorsque le piston est monté, un angle β qui est plus grand que l'angle α. C'est la différence entre les angles β et α qui donne

naissance à la force élastique qui applique chaque lamelle contre le cylindre lorsque le segment est monté à l'intérieur du cylindre.

La variation de l'écart entre ces deux angles et celle de l'épaisseur des lamelles élastiques permettent, lors de la fabrication, de régler à volonté la pression élastique avec laquelle chaque lamelle est appuyée sur le cylindre. L'angle α des lamelles 1317 et 1417 avec la paroi du cylindre est très faible, un angle de 7° par exemple, connu comme favorable aux effets Kingsbury d'entraînement de l'huile entre parois en mouvement, est indiqué comme favorable au recyclage de l'huile pendant les courses montantes du piston, aussi bien qu'au raclage pendant ses courses descendantes.

La figure 20 représente en perspective la coupe d'un segment du type présenté figure 11, auquel est ajouté à chaque face de la coupe un petit rebord à angle droit 2034 et 2035 disposé à chaque extrémité de la rondelle plate 2018 du segment. La hauteur de ce rebord est au maximum égale à l'épaisseur de la cale annulaire ou du joint 1322, 1522. Il présente l'avantage d'assurer à la coupe du segment, dont les deux extrémités sont appuyées l'une contre l'autre en service, une butée positive qui les protège contre tout risque de chevauchement que leur faible épaisseur peut rendre possible.

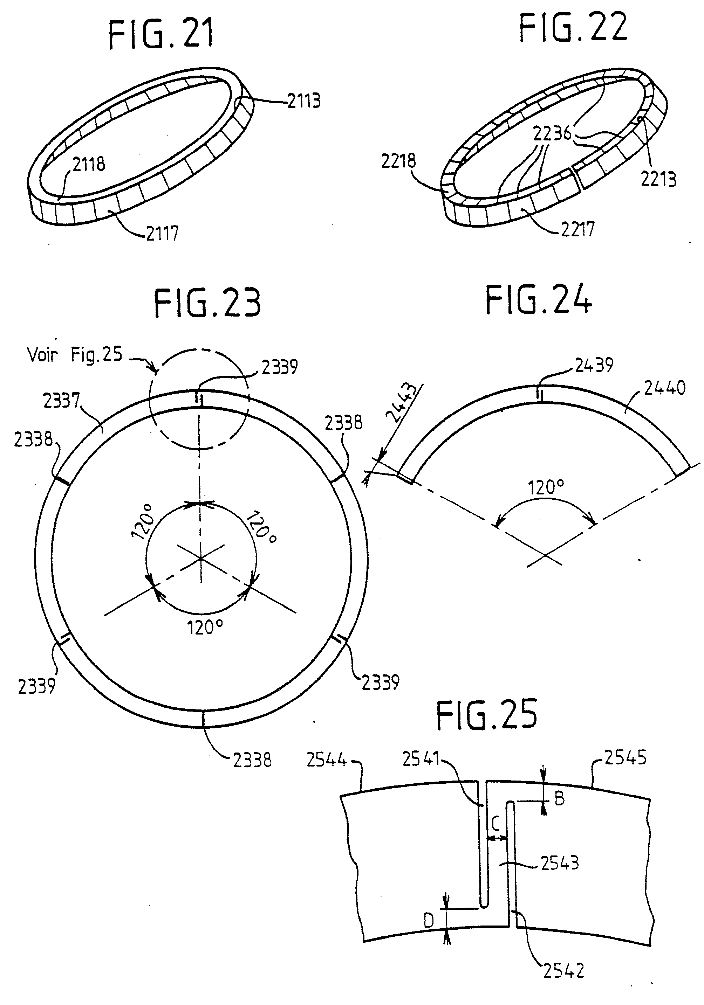

Sur la figure 21, on reconnaît le segment 2113 analogue au segment 113 de la figure 11, son anneau plat 2118 qui relie les lamelles flexibles 2117, mais il ne comporte aucune coupe et le segment ne peut pas s'ouvrir. Aussi il ne peut être monté que sur un piston composé d'au moins deux pièces, le plan de raccordement de chacune de ces 2 pièces constituant chacun une face latérale de la gorge du segment racleur.

La suppression de la coupe du segment racleur économise éventuellement une opération de fabrication et donne au segment une meilleure tenue dans les manipulations que la pièce coupée, simplifie sa mise en place et élimine tout risque de chevauchement en service des deux extrémités. En revanche, elle a l'inconvénient d'exiger un piston composé de deux pièces, mais cette disposition peut en certains cas se présenter comme le meilleur compromis.

La figure 22 représente un segment 2213 qui est analogue au segment 113 de la figure 11, mais dont l'anneau plat 2218 porte des coupes radiales ouvertes vers l'intérieur 2236 qui sont effectuées sur tout ou partie de la largeur de l'anneau 2218.

Ces coupes radiales sont réparties en nombre au plus égal au nombre des lamelles 2217 tout autour de l'anneau plat 2218 et chaque coupe est placée en face d'une lamelle 2217 et disposée à distance égale des 2 coupes qui délimitent cette lamelle, afin de ménager la plus grande distance possible de matériau non coupé entre les fonds de chaque coupe radiale et ceux des coupes de séparation des lamelles. Les coupes radiales 2236 peuvent être en nombre plus réduit que le nombre des lamelles ; en ce cas, elles sont réparties le plus régulièrement possible sur le pourtour du segment.

Les coupes radiales permettent d'ouvrir le segment et de le mettre en place aisément, en évitant toute déformation, même dans une gorge très étroite.

Une variante aux segments de compression des figures 2 et 4 est illustrée en figures 23, 24. Le segment de compression comporte au moins deux secteurs annulaires couvrant à l'état libre un secteur angulaire total supérieur à 360°, au moins un desdits secteurs comportant un micro-ressort.

Les secteurs annulaires peuvent présenter toute section connue de segment de compression et une section mince en métal élastique (fonte ou acier par exemple). Le segment de compression comporte ainsi au moins deux secteurs annulaires formant en fonctionnement un anneau, la périphérie de chaque secteur étant par construction à la forme et à la dimension du cylindre, ledit anneau disposant d'au moins une coupe en contact avec le cylindre soumise à l'action d'un micro-ressort dont l'épaisseur n'excède pas la sienne, ledit (lesdits) micro-ressort(s), logé(s) dans la gorge de l'anneau agrandit (agrandissent) légèrement le diamètre à l'état libre dudit anneau de telle sorte que lorsque l'anneau est dans le cylindre, d'une part la (les) coupe(s) en contact avec le cylindre présente (présentent) le jeu nécessaire à l'extension thermique de l'anneau et, d'autre part le (les) micro-ressort(s) est (sont) comprimé(s) et exerce(nt) sur l'anneau un effort d'ouverture parallèle à sa circonférence qui se transmet à toute sa circonférence en produisant un effort l'appliquant contre le cylindre, lequel effort est identique à chaque point de sa circonférence.

La bonne répartition et la grande précision du contact d'un tel segment avec le cylindre ainsi que la régularité de l'effort élastique de son application contre le cylindre lui permettent d'assurer une excellente étanchéité et de réduire à un très faible niveau sa pression d'application contre le cylindre, et cette pression peut être d'autant plus faible que le segment est moins épais.

La section de l'anneau est régulière sur tout son pourtour. De préférence ce segment est en acier à ressort et son épaisseur est mince, par exemple, de 0,60 mm pour un segment de 80 mm de diamètre.

La figure 23 représente en position de fonctionnement un segment de compression suivant cette variante de l'invention. Le segment de compression est composé d'un anneau 2337 en métal élastique divisé ici en trois secteurs schématisés à la figure 23 par les trois traits 2338. Un de ces secteurs, référencé en 2440, est illustré en figure 24. En fonctionnement l'ensemble des trois secteurs forme un anneau, tandis qu'à l'état libre, comme il sera exposé plus loin, l'ensemble des trois secteurs couvre un secteur angulaire total supérieur à 360°. Ainsi les faces de chaque coupe 2338 sont jointives lorsque le segment est monté, si bien que les nombres de coupes et de secteurs, au minimum deux coupes et deux secteurs, n'ont pas d'influence, au moins en principe, sur le comportement du segment. Ce segment porte trois micro-ressorts 2339.

La figure 24 représente un secteur 2440 muni d'un micro-ressort 2439 et

La figure 25 montre un exemple de ces micro-ressorts. Dans cet exemple, le micro-ressort est constitué par deux coupes étroites radiales partielles alternées. La coupe 2541 est ouverte vers l'extérieur et la coupe 2542 est ouverte vers l'intérieur et elles créent entre elles une languette radiale 2543 déformable et élastique qui joue le rôle de ressort.

Ces coupes partielles étroites alternées pourraient être en nombre quelconque au-dessus de deux. Elles pourraient également être autres que radiales, chaque languette élastique déformable 2543 devenant elle aussi autre que radiale, cette disposition pouvant contribuer à éviter que les contraintes de micro-ressort ne déforment le pourtour de l'anneau qui doit conserver sa forme de fabrication exactement circulaire.

Lorsque le segment est monté dans le cylindre, ces coupes partielles, notamment les coupes extérieures 2541, sont très étroites car elles doivent ensemble être égales au jeu nécessaire à l'extension thermique du segment. Pour un segment de diamètre 80 mm par exemple, ce jeu est de l'ordre de 0,40 mm. S'il comporte trois secteurs 2440 ayant chacun un micro-ressort 2439, la largeur de chaque coupe 2541 en place dans le cylindre sera de l'ordre de 0,13 mm ; En supposant que chaque coupe partielle alternée soit exécutée avec une largeur de 0,50 mm par exemple, la longueur de la circonférence du segment à l'état libre excédant celle du cylindre serait de $3 \times 0,50 - 3 \times 0,13 = 1,11$ mm, ce qui correspondrait à un diamètre dépassant celui du cylindre $1,11/\pi = 0,353$ mm.

Pour le montage du segment dans le cylindre les coupes de chaque secteur seront jointives, en butée l'une contre l'autre et chaque micro-ressort subira une compression tendant à agrandir le diamètre du segment, donc à l'appliquer contre le cylindre. Cette application sera répartie régulièrement sur tout le pourtour du segment, d'une part parce que ce pourtour épousera exactement la paroi du cylindre, puisqu'il aura été fabriqué à ses forme et dimension et d'autre part, parce que les micro-ressorts exerceront leur poussée en direction circonférentielle, ce qui transmet exactement le même effort à tous les points de la circonférence du segment, surtout avec, au moins trois micro-ressorts également répartis.

Pour une épaisseur donnée du segment, les largeurs B et D, figure 25, ménagées entre le fond des coupes et les bords extérieur et intérieur du segment, la largeur C de chaque languette élastique 2543 d'une part et d'autre part la largeur des coupes 2541 et 2542 qui modifierait le diamètre du segment libre, sont des moyens de régler les caractéristiques de chaque micro-ressort 2339, 2439, afin d'atteindre la pression de contact segment/cylindre la plus réduite possible tout en assurant l'étanchéité et en gardant une réserve d'extension pour suivre les effets de l'usure. De préférence, les fonds des coupes partielles 2541, 2542, sont arrondis pour éviter d'amorcer des ruptures par fatigue du métal autour desdits fonds de coupes.

Le pourtour de ce segment est obtenu par tout moyen de mise en forme connu, roulage, usinage, rectification, à un diamètre très voisin sinon exactement égal à celui du cylindre.

Le segment étant composé de plusieurs secteurs, chaque secteur à l'état libre, devra être un peu plus long (2443) que la fraction de circonférence du cylindre qu'il doit occuper, pour assurer la compression de son (ses) micro-ressort(s) (2439) et pour réduire la largeur de sa (ses) coupe(s) partielle(s) (2541) au jeu nécessaire à l'extension thermique du segment. Cet allongement des sections sera particulièrement aisé avec des segments fabriqués par roulage en continu de feuillard d'acier. En effet, ce procédé permet d'obtenir un rouleau de spires jointives qui peut être rectifié extérieurement à la cote exacte du cylindre et on peut couper dans ce rouleau des secteurs de toutes longueurs.

Toutes les dimensions citées à titre d'exemples de mesures, par exemple d'épaisseurs de matériaux, de largeur de contact entre lèvres et cylindre, de jeux entre lamelles jointives, de jeux et de largeurs de coupes partielles, correspondent à des segments de moteur d'une automobile de petite cylindrée, c'est-à-dire d'un diamètre de cylindre de l'ordre de 80 mm.

Ces diverses mesures peuvent varier en fonction des diamètres de cylindre, mais restent dans la proportion fixée par les exemples des chiffres ci-dessus.

Le fonctionnement et les avantages de ce nouvel ensemble cylindre, piston et segmentation légers sont les suivants :

Le segment de compression figures 2 et 4 comportant au moins un anneau métallique élastique mince dont la coupe est munie d'un moyen d'obturation du passage de gaz le long du cylindre assisté d'un joint en « Téflon » par exemple, assure par suppression du passage de coupe et par assistance du joint, une étanchéité très élevée au passage de gaz, avec un effort de frottement sur le cylindre réduit par le fait que la force d'extension d'anneaux minces, est beaucoup plus faible que celle de segments conventionnels qui sont plus épais.

Quant au segment de compression figures 23, 24 et 25, il apporte par rapport à tous les segments connus des résultats nouveaux :

son contact avec le cylindre est le meilleur possible, puisqu'il est formé, usiné ou rectifié à une forme et dimension très voisines sinon exactement celles du cylindre ;

l'effort d'application de son pourtour sur le cylindre est le même en tous points.

Pour ces deux raisons, cet effort peut être beaucoup plus faible que celui de tout autre segment. D'ailleurs, il ne résulte que de la réaction de micro-ressort(s) (2339, 2439, 2639) qui, par construction, ne peuvent développer que des efforts très faibles ;

enfin, dans le cas de micro-ressort(s) (2339-2439), il ne présente aucun jeu de coupe totale, ses coupes totales (2338), étant jointives et le jeu de coupe qui est nécessaire aux extensions thermiques est divisé par le nombre de micro-ressorts (2439) ce qui réduit le passage de gaz par effet de laminage.

Ainsi, ce segment offre une étanchéité supérieure à tous segments connus pour un frottement et une usure beaucoup plus faible. Au surplus, il se prête très bien à l'emploi d'un joint de gorge en « Téflon » ce qui ajoute encore à son efficacité contre les passages de gaz.

De plus, il se prête à une grande flexibilité circonférentielle, en augmentant le nombre de groupes de coupes partielles alternées, ce qui est un avantage important dans certains moteurs dont les cylindres subissent des déformations importantes en service.

Enfin, sa fabrication en acier mince obtenu par roulage comme expliqué plus haut est beaucoup plus économique que la fabrication de segments conventionnels actuellement utilisés.

En revanche, il est connu qu'un segment étanche au passage de gaz a l'inconvénient de produire un effet de pompage d'huile vers les hauts du cylindre. La coopération avec le segment racleur, dont on verra plus loin la très haute efficacité, apporte un remède à ces inconvénients.

On sait encore que la tenue en service du joint de matériau plastique (Téflon notamment) est excellente : elle peut atteindre la vie du moteur, à la seule exception de l'attaque de son bord extérieur par les rugosités du cylindre qui sont nécessaires, en l'état actuel de la technologie, pour constituer des réserves d'huile sur les parois de cylindre, afin d'éviter le « scuffing ».

Or, la réduction très élevée du passage de gaz et celle du frottement de la segmentation de compression, en supprimant les entraînements de résidus de combustion abrasifs, les points chauds du segment et le brûlage de l'huile sur le cylindre et autour du segment de compression, créent des conditions de lubrification nouvelles qui permettent de recourir à deux moyens nouveaux :

d'une part, le prolongement du contact entre le piston et le cylindre jusqu'à la tête du piston, alors que généralement ce contact est limité à la chemise du piston, en dessous du segment racleur ;

d'autre part, l'utilisation pour les surfaces intérieures des cylindres d'un degré de polissage élevé.

Ces deux mesures réduisent les frottements, améliorent l'échange thermique entre cylindre et piston et, ajouté au fait que le piston peut être moins haut en n'ayant que deux segments, elles permettent de réduire sa hauteur, donc de l'alléger substantiellement. De plus, elles suppriment l'usure latérale du joint de matériau plastique (Téflon, notamment).

Quant au fonctionnement du segment racleur, ses lamelles élastiques n'ont avec le cylindre qu'une surface de contact circulaire très étroite, soumise à une pression très légère et sont placées en position absolument idéale, aussi bien pour racler l'huile dans les courses descendantes que pour la recycler dans les courses montantes ; elles assurent donc au plus haut niveau possible le contrôle des remontées d'huile vers les chambres de combustion et la réduction des frottements qui sont très élevés avec les segments conventionnels puisque tous réalisent le raclage par une pression élevée de lèvres ayant non une surface très étroite, mais une surface de contact assez large avec le cylindre et travaillant en position perpendiculaire contre le cylindre, laquelle est aussi peu favorable que possible au raclage et au recyclage, puisque lors d'une course sur deux, les courses remontantes, les segments racleurs perpendiculaires au cylindre raclent et renvoient l'huile dans le mauvais sens : du côté opposé au carter.

Ainsi, le nouvel ensemble réunit, positivement, par coopération nouvelle de ses divers éléments :

la réduction à un niveau négligeable ou la suppression du passage des gaz entre pistons et cylindres ;

la maîtrise du contrôle des remontées d'huile ;

la réduction de la plus large partie des frottements et des usures entre pistons et cylindre ;

l'allègement du piston et de sa segmentation.

Tout cela procure des économies d'énergie, d'huile, d'usures mécaniques et d'entretien.

D'autres avantages encore en résultent ; parmi eux, notamment, le meilleur démarrage à froid par l'amélioration de la compression surtout sur les moteurs Diesel, et la réduction de la pollution par diminution des volumes piégés d'air et de combustible entre piston, segments et cylindre.

Enfin, il doit être précisé que l'utilisation séparée du segment de compression et du segment racleur, décrits dans cet ensemble, reste dans le cadre de l'invention car, si une telle utilisation n'atteint pas tous les effets de la coopération sus-exposée, chacun de ces éléments utilisé isolément apporte ses avantages propres, notamment :

pour le segment de compression : étanchéité élevée au passage de gaz, diminution du frottement, réduction d'usures, allègement du segment de compression gains en performances, en durée des organes et en économie d'énergie ;

pour le segment racleur : raclage de l'huile à simple effet très efficace dans les courses descendantes en la reconduisant au carter et recyclage à simple effet, du film d'huile restant sur le cylindre très efficace dans les courses remontantes en la réintroduisant dans le circuit du carter, réduction du frottement sur le cylindre à une fraction très faible du frottement de tous autres segments racleurs, réduction d'usures, allègement du segment racleur, gains en performances, en durée des organes et en économie d'énergie.

Les deux organes principaux de l'invention ont donc une individualité qui reste viable lorsqu'ils sont utilisés séparément, mais leur coopération peut seule obtenir tous les avantages de l'invention.

C'est ainsi, en effet :

que le segment de compression, s'il est utilisé séparément du segment racleur à très haut niveau de contrôle d'huile, ne peut pas maîtriser l'effet de pompage d'huile déjà signalé qui entraîne une consommation d'huile rédhibitoire, très difficile, sinon impossible, à réduire de façon sûre et suffisante en fabrication de série ;

que le segment racleur, s'il est utilisé séparément du segment de compression :

d'une part, est exposé aux passages de gaz des segments de compression conventionnels, et qu'ainsi il reçoit avec ces gaz les résidus abrasifs de combustion qu'ils provoquent et entraînent, ce qui est un facteur d'usure de son contact circulaire très étroit avec le cylindre :

d'autre part, reste obligé de fonctionner dans un cylindre présentant les degrés habituels de rugosité, au lieu d'un cylindre à haut niveau de polissage.

Ces deux conditions sont nuisibles à la bonne conservation sans usure du portage circulaire très étroit des lamelles élastiques du segment racleur contre le cylindre.

**Revendications**

1. Ensemble destiné à être monté sur un piston coulissant dans un cylindre, comportant un segment racleur comportant une partie annulaire de maintien raccordée par une pliure à une jupe tronconique formant avec la paroi du cylindre un angle aigu ouvert vers la tête du piston et un segment de compression, caractérisé en ce que la jupe du segment racleur est constituée en métal très mince d'épaisseur sensiblement constante et en ce que cette jupe comporte une pluralité de lamelles (1117, 1217) reliées de façon flexible à la partie annulaire de maintien (1118, 1218), indépendantes les unes des autres, lesdites lamelles étant en position contrainte dans le cylindre (α), voisine de leur position libre (β), jointives entre elles sauf jeux micrométriques, étant appliquées contre le cylindre (133, 144) avec seulement la force élastique très faible due à leur épaisseur très mince et à leur faible déplacement angulaire et présentant une ligne de contact avec le cylindre continue sauf jeux micrométriques, ladite jupe étant de ce fait ouverte vers le côté opposé à la tête du piston et étanche sauf jeux micrométriques en direction de la tête du piston et en ce que le segment de compression comporte au moins un anneau mince plat en métal élastique (95, 1011) comportant des encoches (916, 1016) réparties inégalement sur son pourtour intérieur afin d'uniformiser la tension dudit anneau contre le cylindre aux différents points de sa périphérie.

2. Ensemble destiné à être monté sur un piston coulissant dans un cylindre, comportant un segment racleur comportant une partie annulaire de maintien raccordée par une pliure à jupe tronconique formant avec la paroi du cylindre un angle aigu ouvert vers la tête du piston et un segment de compression, caractérisé en ce que la jupe du segment racleur est constituée en métal très mince d'épaisseur sensiblement constante et en ce que cette jupe comporte une pluralité de lamelles (1117, 1217) reliées de façon flexible à la partie annulaire de maintien (1118, 1218), indépendantes les unes des autres, lesdites lamelles étant en position contrainte dans le cylindre (α), voisine de leur position libre (β), jointives entre elles sauf jeux micrométriques, étant appliquées contre le cylindre (134, 144) avec seulement la force élastique très faible due à leur épaisseur très mince et à leur faible déplacement angulaire et présentant une ligne de contact avec le cylindre continue sauf jeux micrométriques, ladite jupe étant de ce fait ouverte vers le côté opposé à la tête du piston et étanche sauf jeux micrométriques en direction et de la tête du piston et en ce que le segment de compression comporte au moins deux secteurs annulaires indépendants (2440) couvrant, à l'état libre, un secteur angulaire total supérieur à 360° et en ce qu'au moins un desdits secteurs comporte au moins un micro-ressort (2439).

3. Ensemble selon l'une quelconque des revendications 1, 2, caractérisé en ce que le segment de compression (25, 45, 411, 95, 1011) est assisté par un anneau mince plat, en matériau plastique (26, 46, 76) dont la lèvre circulaire est appliquée contre le cylindre par l'effet de son diamètre, ce segment et cet anneau étant disposés avec un faible jeu latéral et axial (27, 47) dans la gorge du piston dans laquelle le segment de compression est monté et le susdit anneau mince (26, 46, 76) en matériau plastique étant disposé entre la face de gorge du piston (21) située du côté du carter et le susdit segment de compression.

4. Ensemble selon l'une quelconque des revendications 1, 3 comportant un segment de compression réalisé par deux anneaux accolés coupés, minces, avec un moyen de limitation de leur rotation l'un par rapport à l'autre, caractérisé en ce que le moyen d'obturation de la coupe est réalisé par ces deux anneaux accolés (45, 411, 55, 611) qui sont en outre plats, en métal élastique, disposés avec un jeu latéral et axial (47) dans leur gorge, et dont les lèvres circulaires sont appliquées contre le cylindre (14, 44) par le seul effet de leur tension élastique, lesquels anneaux étant munis d'un moyen (512, 912, 613, 1013, 614, 1014) respectant l'indépendance de leurs mouvements radiaux tout en imposant une limitation à leur rotation l'un par rapport à l'autre autour de l'axe du piston, lequel moyen n'offre au passage de gaz par la coupe de chaque anneau qu'une seule voie de passage non directe entre le cylindre et le fond de gorge.

5. Ensemble selon l'une quelconque des revendications 1 à 4, caractérisé en ce que, au moins un anneau mince plat en métal élastique (25, 35, 45, 411, 55, 611, 95, 1011) du segment de compression (12, 22, 42) comporte des encoches (916, 1016) réparties inégalement sur son pourtour intérieur pour réduire en l'uniformisant la tension de l'(des) anneau(x) contre le cylindre aux différents points de sa(leur) périphérie.

6. Ensemble selon l'une quelconque des revendications 1 à 5, caractérisé en ce que le segment racleur présente une coupe et en ce que celle-ci comporte une butée (2034, 2035) de fermeture, coopérant avec une cale (1322, 1522) d'épaisseur (1524) au moins égale à la hauteur des bords (2034, 2035) de la butée.

7. Ensemble selon l'une quelconque des revendications 1 à 6, caractérisé en ce que le segment racleur comporte sur l'anneau plat (2218) de liaison des lamelles et sur au moins une partie de sa largeur, des coupes radiales ouvertes vers l'intérieur (2236).

8. Ensemble selon l'une quelconque des revendications 2, 6 et 7, caractérisé en ce que ledit micro-ressort (2439) est constitué par au moins deux coupes étroites voisines partielles alternées, l'une (2541) ouverte vers l'extérieur, l'autre (2542) ouverte vers l'intérieur, ces deux coupes ménageant ainsi entr'elles une languette (2543) déformable et élastique, la largeur desdites coupes correspondant au jeu nécessaire à l'expansion thermique du ressort.

9. Ensemble selon l'une quelconque des revendications 2, 6 à 8, caractérisé en ce que la périphérie desdits secteurs (2440) du segment de compression est par construction à la forme du cylindre dans lequel cet ensemble doit être utilisé.

10. Ensemble selon l'une quelconque des revendications 1 à 9, caractérisé en ce que la partie circulaire du segment racleur est constituée par une rondelle plate (1118, 1318, 2018, 2118, 2218) maintenue par le piston (131) dans une gorge (1320). avec un faible jeu radial et axial (1320).

11. Ensemble selon l'une quelconque des revendications 1 à 9, caractérisé en ce que la partie circulaire du segment racleur est constituée par un tronçon cylindrique (1218, 1418) maintenue par le piston (141) par collage dans un logement circulaire (1425).

12. Ensemble selon l'une quelconque des revendications 1 à 10, caractérisé en ce que le segment racleur est monté dans une gorge de piston avec l'assistance d'une cale (1322) restant en contact avec le fond de gorge et à distance du cylindre, la largeur de la gorge du piston étant en ce cas égale à l'épaisseur du segment, l'épaisseur de la cale et le faible jeu nécessaire au fonctionnement du segment.

13. Ensemble selon l'une quelconque des revendications 1 à 12, comportant en outre le piston sur lequel lesdits segments sont montés, caractérisé en ce que le piston est composé au moins de deux pièces, le plan de raccordement de chacune de ces deux pièces constituant chacun une face latérale de la gorge du segment racleur, la coupe (1119) dudit segment étant supprimée.

14. Ensemble selon l'une quelconque des revendications 1 à 14, comportant en outre le piston sur lequel lesdits segments sont montés, caractérisé en ce que le piston comporte d'une part, le prolongement jusqu'à sa tête du contact entre le piston et le cylindre, et, d'autre part, sur son pourtour au niveau des lamelles du segment racleur (1317, 1417) un espace annulaire (1326, 1426) de réception de l'huile raclée et les moyens de son retour dans le carter (1327, 1429, 1330, 1431).

15. Ensemble selon l'une quelconque des revendications 1 à 14, comportant en outre le cylindre dans lequel coulisse le piston sur lequel lesdits segments sont montés, caractérisé en ce que le cylindre (14, 24, 34, 44, 134, 144) comprend une paroi interne d'un degré de polissage élevé, c'est-à-dire supérieur à celui normalement utilisé.

16. Segment de compression présentant les caractéristiques du segment de compression défini dans l'une quelconque des revendications 1 à 15.

17. Segment racleur présentant les caractéristiques du segment racleur défini dans l'une quelconque des revendications 1 à 15.

**Claims**

1. Structure intended to be mounted on a piston sliding in a cylinder, comprising a scraper segment comprising an annular retaining portion connected by a fold to a frustoconical skirt forming with the wall of the cylinder an acute angle open towards the head of the piston and a compression segment, characterized in that the skirt of the scraper segment is constructed of very thin metal having a substantially constant thickness, and in that this skirt comprises a plurality of strips (1117, 1217) which are flexibly connected to the annular retaining portion (1118, 1218) and which are independent of one another, the said strips being, in their constrained position in the cylinder ($\alpha$), which is close to their free position ($\beta$), in mutual abutment except for micrometric clearances, being applied against the cylinder (133, 144) with only the very small elastic force due to their very small thickness and to their small angular displacement and exhibiting a line of contact with the cylinder, which line is continuous apart from micrometric clearances, the said skirt being therefore open towards the side opposite to the head of the piston and sealed, apart from micrometric clearances, in the direction of the head of the piston, and in that the compression segment comprises at least one flat thin ring of elastic metal (95, 1011) comprising notches (916, 1016) distributed unequally over its internal periphery in order to render the tension of the said ring against the cylinder uniform at the various points of its periphery.

2. Structure intended to be mounted on a piston sliding in a cylinder, comprising a scraper segment comprising an annular retaining portion connected by a fold to frustoconical skirt forming with the wall of the cylinder an acute angle open towards the head of the piston and a compression segment, characterized in that the skirt of the scraper segment is constructed of very thin metal having a substantially constant thickness, and in that this skirt comprises a plurality of strips (1117, 1217) which are flexibly connected to the annular retaining portion (1118, 1218) and which are independent of one another, the said strips being, in their constrained position in the cylinder (α), which is close to their free position (β), in mutual abutment, apart from micrometric clearances, being applied against the cylinder (134, 144) with only the very small elastic force due to their very small thickness and to their small angular displacement and exhibiting a line of contact with the cylinder, which line is continuous, apart from micrometric clearances, the said skirt being therefore open towards the side opposite to the head of the piston and sealed, apart from micrometric clearances, in the direction and (sic) of the head of the piston, and in that the compression segment comprises at least two independent annular sectors (2440) covering, in the free condition, a total angular sector exceeding 360°, and in that at least one of the said sectors comprises at least one microspring (2439).

3. Structure according to either one of Claims 1 and 2, characterized in that the compression segment (25, 45, 411, 95, 1011) is assisted by a flat thin ring of plastic material (26, 46, 76), the circular lip of which is applied against the cylinder by the effect of its diameter, this segment and this ring being disposed with a small lateral and axial clearance (27, 47) in the throat of the piston, in which throat the compression segment is mounted, and the said thin ring (26, 46, 76) of plastic material being disposed between the throat face of the piston (21) situated on the side of the casing and the said compression segment.

4. Structure according to either one of Claims 1 and 3, comprising a compression segment formed by two thin, cut, attached rings, with a means for limiting their rotation relative to one another, characterized in that the means for obturating the cut is formed by these two attached rings (45, 411, 55, 611), which are moreover flat and constructed of elastic metal and disposed with a lateral and axial clearance (47) in their throat, and the circular lips of which are applied against the cylinder (14, 44) solely by the effect of their elastic tension, which rings are equipped with a means (512, 912, 613, 1013, 614, 1014) respecting the independence of their radial movements while imposing a limitation on their rotation relative to one another about the axis of the piston, which means offers to the passage of gas through the cut of each ring only a single indirect passage channel between the cylinder and the throat base.

5. Structure according to any one of Claims 1 to 4, characterized in that at least one flat thin ring of elastic metal (25, 35, 45, 411, 55, 611, 95, 1011) of the compression segment (12, 22, 42) comprises notches (916, 1016) distributed unequally over its internal periphery in order to reduce, while rendering the same uniform, the tension of the ring(s) against the cylinder at the various points of its (their) periphery.

6. Structure according to any one of Claims 1 to 5, characterized in that the scraper segment exhibits a cut, and in that the latter comprises a closing abutment (2034, 2035) cooperating with a shim (1322, 1522) having a thickness (1524) at least equal to the height of the edges (2034, 2035) of the abutment.

7. Structure according to any one of Claims 1 to 6, characterized in that the scraper segment comprises radial cuts open towards the interior (2236) on the flat ring (2218) for linking the strips and on at least one part of its width.

8. Structure according to any one of Claims 2, 6 and 7, characterized in that the said microspring (2439) is formed by at least two alternate partial proximate narrow cuts, one (2541) open towards the exterior, the other (2542) open towards the interior, these two cuts thus providing between them a deformable and elastic tongue (2543), the width of the said cuts corresponding to the clearance required for the thermal expansion of the spring.

9. Structure according to any one of Claims 2 and 6 to 8, characterized in that the periphery of the said sectors (2440) of the compression segment has, by construction, the shape of the cylinder in which this structure is to be used.

10. Structure according to any one of Claims 1 to 9, characterized in that the circular portion of the scraper segment is formed by a flat washer (1118, 1318, 2018, 2118, 2218) retained by the piston (131) in a throat (1320) with a small radial and axial clearance (1320).

11. Structure according to any one of Claims 1 to 9, characterized in that the circular portion of the scraper segment is formed by a cylindrical stump (1218, 1418) retained by the piston (141) by adhesion in a circular recess (1425).

12. Structure according to any one of Claims 1 to 10, characterized in that the scraper segment is mounted in a piston throat with the assistance of a shim (1322) remaining in contact with the throat base and at a distance from the cylinder, the width of the throat of the piston being, in this case, equal to the thickness of the segment, the thickness of the shim and the small clearance required for the operation of the segment.

13. Structure according to any one of Claims 1 to 12, further comprising the piston on which the said segments are mounted, characterized in that the piston is formed of at least two parts, the plane of connection of each one of these two parts forming in each case a lateral face of the throat of the scraper segment, the cut (1119) of the said segment being omitted.

14. Structure according to any one of Claims 1 to 14, further comprising the piston on which the said segments are mounted, characterized in that the piston includes, on the one hand, the extension up to its head of the contact between the piston and the cylinder and, on the other hand, on its periphery at the location of the strips of the scraper segment (1317, 1417) an annular space (1326, 1426) for receiving the oil scraped off and the means for returning the same into the casing (1327, 1429, 1330, 1431).

15. Structure according to any one of Claims 1 to 14, further comprising the cylinder in which the piston on which the said segments are mounted slides, characterized in that the cylinder (14, 24, 34, 44, 134, 144) comprises an internal wall exhibiting a degree of polishing which is high, that is to say which exceeds that normally used.

16. Compression segment exhibiting the characteristics of the compression segment defined in any one of Claims 1 to 15.

17. Scraper segment exhibiting the characteristics of the scraper segment defined in any one of Claims 1 to 15.

**Patentansprüche**

1. Einheit, die dazu bestimmt ist, auf einen in einem Zylinder gleitenden Kolben montiert zu werden, mit einem Abstreifring, der einen ringförmigen Halteteil besitzt, der durch eine Biegung mit einem kegelstumpfförmigen Mantel verbunden ist, der mit der Wand des Zylinders einen auf den Kopf des Kolbens zu offenen spitzen Winkel bildet, und einem Kompressionsring, dadurch gekennzeichnet, daß der Mantel des Abstreifrings aus sehr dünnem Metall mit im wesentlichen konstanter Dicke besteht und daß dieser Mantel eine Vielzahl von Lamellen (1117, 1217) besitzt, die auf flexible Weise mit dem ringförmigen Halteteil (1118, 1218) verbunden sind und zwar voneinander unabhängig, wobei diese Lamellen in belasteter Stellung in dem Zylinder (α), die ihrer freien Stellung (β) benachbart ist, abgesehen von mikrometrischen Spielen aneinander anstoßen, an den Zylinder (133, 144) nur mit der sehr geringen elastischen Kraft infolge ihrer sehr dünnen Dicke und ihrer geringen Winkelbewegung angelegt sind und eine Kontaktlinie mit dem Zylinder besitzen, die abgesehen von mikrometrischen Spielen kontinuierlich ist, wobei dieser Mantel infolgedessen auf die dem Kopf des Kolbens entgegengesetzte Seite zu offen ist und abgesehen von mikrometrischen Spielen in Richtung des Kopfes des Kolbens dicht ist und daß der Kompressionsring mindestens einen dünnen flachen Ring aus elastischem Metall (95, 1011) besitzt, der Ausschnitte (916, 1016) besitzt, die ungleichmäßig auf seinem Innenumfang verteilt sind, um die Spannung dieses Rings gegen den Zylinder an den verschiedenen Punkten seines Umfangs gleichmäßig zu machen.

2. Einheit, die dazu bestimmt ist, auf einen in einem Zylinder gleitenden Kolben montiert zu werden, mit einem Abstreifring, der einen ringförmigen Halteteil besitzt, der durch eine Biegung mit einem kegelstumpfförmigen Mantel verbunden ist, der mit der Wand des Zylinders einen auf den Kopf des Kolbens zu offenen spitzen Winkel bildet, und einem Kompressionsring, dadurch gekennzeichnet, daß der Mantel des Abstreifrings aus sehr dünnem Metall mit im wesentlichen konstanter Dicke besteht und daß dieser Mantel eine Vielzahl von Lamellen (1117, 1217) besitzt, die auf flexible Weise mit dem ringförmigen Halteteil (1118, 1218) verbunden sind und zwar voneinander unabhängig, wobei diese Lamellen in belasteter Stellung in dem Zylinder (α), die ihrer freien Stellung (β) benachbart ist, abgesehen von mikrometrischen Spielen aneinander anstoßen, an den Zylinder (133, 144) nur mit der sehr geringen elastischen Kraft infolge ihrer sehr dünnen Dicke und ihrer geringen Winkelbewegung angelegt sind und eine Kontaktlinie mit dem Zylinder besitzen, die abgesehen von mikrometrischen Spielen kontinuierlich ist, wobei dieser Mantel infolgedessen auf die dem Kopf des Kolbens entgegengesetzte Seite zu offen ist und abgesehen von mikrometrischen Spielen in Richtung des Kopfes des Kolbens dicht ist und daß der Kompressionsring mindestens zwei unabhängige ringförmige Sektoren (2440) besitzt, die im freien Zustand einen ringförmigen Gesamtsektor von über 360° bedecken und daß mindestens einer dieser Sektoren mindestens eine Mikrofeder (2439) besitzt.

3. Einheit nach einem der Ansprüche 1 und 2, dadurch gekennzeichnet, daß der Kompressionsring (25, 45, 411, 95, 1011) durch einen dünnen flachen Ring aus Kunststoff (26, 46, 76) unterstützt ist, dessen kreisförmige Lippe an den Zylinder durch die Wirkung seines Durchmessers angelegt ist, wobei dieser Kompressionsring und dieser Ring mit einem geringen seitlichen und axialen Spiel (27, 47) in der Nut des Kolbens angeordnet sind, in der der Kompressionsring montiert ist, und dieser dünne Ring (26, 46, 76) aus Kunststoff zwischen der Nutfläche des Kolbens (21), die auf der Seite des Gehäuses gelegen ist, und dem Kompressionsring angeordnet ist.

4. Einheit nach einem der Ansprüche 1 und 3 mit einem Kompressionsring, der aus zwei dünnen geschnittenen, zusammengefügten Ringen mit einer Einrichtung zur Begrenzung ihrer Drehung zueinander gebildet ist, dadurch gekennzeichnet, daß die Einrichtung zur Verschließung des Schnitts durch diese beiden zusammengefügten Ringe (45, 411, 55, 611) gebildet ist, die außerdem flach und aus elastischem Metall sind, mit einem seitlichen und axialen Spiel (47) in ihrer Nut angeordnet sind und deren kreisförmige Lippen an den Zylinder (14, 44) allein durch die Wirkung ihrer elastischen Spannung angelegt sind, wobei diese Ringe mit einer Einrichtung (512, 912, 613, 1013, 614, 1014) versehen sind, die die Unabhängigkeit ihrer radialen Bewegungen wahrt und gleichzeitig eine Begrenzung ihrer Drehung zueinander um die Achse des Kolbens auferlegt, wobei diese Einrichtung dem Gasdurchgang durch den Schnitt jedes Rings nur einen einzigen nicht direkten Durchgangsweg zwischen dem Zylinder und dem Nutboden bietet.

5. Einheit nach einem der Ansprüche 1 bis 4, dadurch gekennzeichnet, daß mindestens ein dünner flacher Ring aus elastischem Metall (25, 35, 45, 411, 55, 611, 95, 1011) des Kompressionsrings (12, 22, 42) Ausschnitte (916, 1016) besitzt, die ungleichmäßig auf seinem Innenumfang verteilt sind, um die Spannung des/der Ringe an dem Zylinder an den verschiedenen Punkten seines/ihrer Umfänge zu verringern, indem sie einheitlich gemacht wird.

6. Einheit nach einem der Ansprüche 1 bis 5, dadurch gekennzeichnet, daß der Abstreifring einen Schnitt besitzt und daß dieser einen Verschlußanschlag (2034, 2035) besitzt, der mit einer Beilage (1322, 1522) mit einer Dicke (1524) besitzt, die mindestens gleich der Höhe der Ränder (2034, 2035) des Anschlags ist.

7. Einheit nach einem der Ansprüche 1 bis 6, dadurch gekennzeichnet, daß der Abstreifring auf dem flachen Ring (2218) zur Verbindung der Lamellen und auf mindestens einem Teil seiner Breite radiale, nach innen offene Schnitte (2236) besitzt.

8. Einheit nach einem der Ansprüche 2, 6 und 7, dadurch gekennzeichnet, daß die Mikrofeder (2439) aus mindestens zwei engen benachbarten, einander abwechselnden Teilschnitten gebildet ist, deren einer (2541) nach außen und deren anderer (2542) nach innen offen ist, wobei diese beiden Schnitte aus diese Weise zwischen sich eine verformbare und elastische Zunge (2453) schaffen, wobei die Breite dieser Schnitte dem für die thermische Ausdehnung der Feder erforderlichen Spiel entspricht.

9. Einheit nach einem der Ansprüche 2, 6 bis 8, dadurch gekennzeichnet, daß der Umfang dieser Sektoren (2440) des Kompressionsrings aufgrund der Konstruktion in der Form des Zylinders ist, in dem diese Einheit verwendet werden soll.

10. Einheit nach einem der Ansprüche 1 bis 9, dadurch gekennzeichnet, daß der kreisförmige Teil des Abstreifrings von einer flachen Scheibe (1118, 1318, 2018, 2118, 2218) gebildet ist, die durch den Kolben (131) in einer Nut (1320) mit einem geringen radialen und axialen Spiel (1320) gehalten ist.

11. Einheit nach einem der Ansprüche 1 bis 9, dadurch gekennzeichnet, daß der kreisförmige Teil des Abstreifrings durch einen zylindrischen Abschnitt (1218, 1418) gebildet ist, der von dem Kolben (141) durch Verkleben in einer kreisförmigen Aussparung (1425) gehalten ist.

12. Einheit nach einem der Ansprüche 1 bis 10, dadurch gekennzeichnet, daß der Abstreifring in einer Kolbennut mit Unterstützung einer Beilage (1322) montiert ist, die mit dem Nutboden in Kontakt und in einem Abstand vom Zylinder bleibt, wobei die Breite der Nut des Kolbens in diesem Fall gleich der Dicke des Rings, der Dicke der Beilage und dem geringen, für den Betrieb des Rings erforderlichen Spiel ist.

13. Einheit nach einem der Ansprüche 1 bis 12, die außerdem den Kolben umfaßt, auf dem diese Ringe montiert sind, dadurch gekennzeichnet, daß der Kolben aus mindestens zwei Teilen zusammengesetzt ist, wobei die Verbindungsebene von jedem dieser beiden Teile jeweils eine Seitenfläche der Nut des Abstreifrings bildet, wobei der Schnitt (1119) dieses Rings weggelassen ist.

14. Einheit nach einem der Ansprüche 1 bis 14, die außerdem den Kolben umfaßt, auf dem diese Ringe montiert sind, dadurch gekennzeichnet, daß der Kolben einerseits die Verlängerung bis zu seinem Kopf des Kontakts zwischen dem Kolben und dem Zylinder und andererseits auf seinem Umfang in Höhe der Lamellen des Abstreifrings (1317, 1417) einen ringförmigen Raum (1326, 1426) zur Aufnahme des abgestreiften Öls und die Einrichtungen zu seiner Rückleitung in das Gehäuse (1327, 1429, 1330, 1431) besitzt.

15. Einheit nach einem der Ansprüche 1 bis 14, die außerdem den Zylinder umfaßt, in dem der Kolben gleitet, auf dem diese Ringe montiert sind, dadurch gekennzeichnet, daß der Zylinder (14, 24, 34, 44, 134, 144) eine Innenwand mit einem hohen, d. h. höher als normalerweise verwendeten Schliffgrad besitzt.

16. Kompressionsring, der die Merkmale des in einem der Ansprüche 1 bis 15 definierten Kompressionsrings besitzt.

17. Abstreifring, der die Merkmale des in einem der Ansprüche 1 bis 15 definierten Abstreifrings besitzt.

FIG.1

FIG.2

FIG.3

FIG.4

FIG.6

FIG.5

FIG.7

FIG.8

FIG.9

FIG.10

FIG.11

FIG.12

FIG.13

FIG.14

FIG.15

FIG.17

FIG.16

FIG.19

FIG.18

FIG.20

# FIG.21

2113
2118
2117

# FIG.22

2236
2218
2213
2217

# FIG.23

Voir Fig.25
2339
2337
2338
2338
120°
120°
120°
2339
2339
2338

# FIG.24

2439
2440
2443
120°

# FIG.25

2544
2541
2545
B
C
2543
D
2542